# EUROPÄISCHE PATENTSCHRIFT

(11) **EP 0 665 382 B1**
(45) Veröffentlichungstag und Bekanntmachung des Hinweises auf die Patenterteilung: **23.04.1997**
(21) Anmeldenummer: 94118403.8
(22) Anmeldetag: 23.11.1994
(51) Int. Cl.: F16B 13/06

(54) **Spreizanker aus Metall und Verfahren zu dessen Herstellung**
Metallic expanding anchor and method for making the same
Dispositif d'ancrage à cheville expansible métallique et son procédé de fabrication

(30) Priorität: 28.01.1994 DE 4402478
(43) Veröffentlichungstag der Anmeldung: 02.08.1995
(73) Patentinhaber: fischerwerke Artur Fischer GmbH & Co. KG, D-72178 Waldachtal (DE)
(72) Erfinder: Haage, Manfred, Dipl.-Ing., D-72280 Dornstetten (DE); Seibold, Günter, Dipl.-Ing., D-72285 Pfalzgrafenweiler (DE); Plocher, Bernd, Dipl.-Ing., D-72108 Rottenburg (DE); Hein, Bernd, Dipl.-Ing., D-72250 Freudenstadt (DE); Weber, Wilfried, Dipl.-Ing., D-72296 Schopfloch (DE)

(56) Entgegenhaltungen:
- DE-A- 3 526 784
- GB-A- 2 097 503
- GB-A- 2 151 739
- GB-A- 2 160 610
- US-A- 1 808 318
- US-A- 3 277 770

## Beschreibung

Die Erfindung betrifft einen Spreizanker aus Metall mit einem einen Spreizkonus aufweisenden Schaftteil und am Spreizkonus angeordneten Spreizschalen gemäß Oberbegriff des Anspruches 1, sowie ein Verfahren zu Herstellung des Spreizankers.

Aus der US-A-3 277 770 ist ein gattungsgemäßer Spreizanker bekannt, bei dem zwei Spreizschalen angeordnet sind, deren Außendurchmesser größer ist als der Schaftdurchmesser und die durch einen Ring, z.B. aus weichem Kunststoff, zusammengehalten werden.

Aus der DE-A-3 526 784 ist ein Spreizanker aus Metall bekannt, der ein mit einem Außengewinde und einem Spreizkonus versehenes Schaftteil aufweist. Über den Spreizkonus ist eine mit einem durchgehenden Längsschlitz versehene Spreizhülse gestülpt, die elastisch verformbar ist und einen Außendurchmesser aufweist, der größer ist als der Schaftdurchmesser.

Beim Eintreiben der bekannten Spreizanker in das Bohrloch des Ankergrundes werden die Spreizschalen bzw. wird die Spreizhülse auf den Durchmesser des Bohrloches zusammengedrückt. Dadurch setzen sich die Spreizschalen bzw. setzt sich die Spreizhülse im Bohrloch fest, so daß durch eine Axialverschiebung des Schaftteiles der Spreizkonus in die festgeklemmte(n) Spreizschalen bzw. Spreizhülse zu deren Aufspreizung eingezogen werden kann. Eine Verankerung des Spreizankers ist somit nur möglich, wenn zwischen dem Schaftteil und den Spreizschalen bzw. der Spreizhülse eine Verschiebemöglichkeit besteht und gleichzeitig die Spreizschalen bzw. die Spreizhülse im Bohrloch festsetzbar sind/ist.

Diese Wirkung wird bei den bekannten Metallspreizankern dadurch erreicht, daß die Spreizschalen bzw. die Spreizhülse und das Schaftteil als separate Teile gefertigt und in einem Montageverfahren zusammengefügt sind. Das Schaftteil wird üblicherweise in einem Drehverfahren oder als Kaltfließpreßteil hergestellt, während die Spreizschalen bzw. die Spreizhülse als Stanz- und Biegeteil aus Blech hergestellt sind/ist. Die jeweiligen Herstellverfahren der Einzelteile beschränken einerseits die Gestaltungsmöglichkeiten der Teile und verursachen einen hohen Zeit- und Kostenaufwand für die Herstellung und Montage des Spreizankers.

Der Erfindung liegt die Aufgabe zugrunde, einen Spreizanker aus Metall zu schaffen, der ohne Montageaufwand einfacher und kostengünstiger herstellbar ist.

Die Lösung dieser Aufgabe wird durch die im Anspruch 1 und 9 angegebenen Merkmale erreicht. Durch die Gestaltung des Spreizkonus als Polygon ergeben sich Polygonflächen, deren Ausbildung mittels zwischen den Spreizschalen und den Polygonflächen eingesetzten Schiebern ermöglicht wird. Diese Schieber können entlang der Polygonfläche nach der Ausformung abgezogen werden. Der zwischen der Polygonfläche und der Innenwandung der Spreizschale durch den Schieber entstehende Spalt wird dadurch ausgeglichen, daß die Spreizschalen einen radialen Überstand gegenüber dem Schaftdurchmesser aufweisen. Beim Eintreiben des Spreizankers in das Bohrloch des Verankerungsgrundes werden die überstehenden Spreizschalen auf den Durchmesser des Bohrloches zusammengedrückt, so daß deren Innenwandung auf den Polygonflächen zur Anlage kommt. Gleichzeitig wird die Stegverbindung der Spreizschalen mit dem Schaftteil abgeschert, so daß die Spreizschalen im Bohrloch lose auf den Polygonflächen aufsitzen. Durch die Reibung zwischen der Außenfläche der Spreizschalen und der Bohrlochwandung werden die Spreizschalen ortsfest im Bohrloch gehalten, so daß durch die Axialbewegung des Schaftteiles der durch die Polygonflächen gebildete Spreizkonus in die Spreizschalen eingezogen wird. Dadurch werden die Spreizschalen radial nach außen gedrückt und im Bohrloch verankert. Da jeder Polygonfläche eine eigene, von den anderen Spreizschalen und vom Schaftteil getrennte Spreizschale zugeordnet ist, wird die durch das Einziehen des Spreizkonus sich ergebende radiale Kraftkomponente vollständig in Spreizkraft umgesetzt. Dadurch wird mit einer geringen Einzugskraft eine hohe Haltekraft des Spreizankers erreicht. Die leichte Verschiebbarkeit der Spreizschalen auf den Polygonflächen ermöglicht auch das Nachrutschen des Spreizkonus bei einer durch Rißbildung entstehenden Bohrlocherweiterung. Damit ist der erfindungsgemäße Spreizanker insbesondere auch für Verankerungen in der Zugzone geeignet, in der Risse entstehen können.

Anstelle von planen Polygonflächen können diese auch eine Krümmung mit an jeder Stelle gleichem Krümmungsradius aufweisen. Auch bei derart ausgebildeten Polygonflächen ist eine Entformung durch Abziehen des Schiebers entlang der Polygonflächen möglich.

Um eine gleichmäßige und auf den Umfang verteilte Aufspreizung zu erreichen empfiehlt es sich, den Spreizkonus mit vier Polygonflächen auszubilden.

Das Eintreiben des Spreizankers in das Bohrloch des Verankerungsgrundes mit den überstehenden Spreizschalen kann dadurch erleichtert werden, daß an der vorderen Stirnseite der Spreizschalen eine Anlaufschräge angeordnet ist.

Zur Erhöhung der Reibung zwischen den Spreizschalen und der Bohrlochwandung ist es zweckmäßig, an den Außenflächen der Spreizschalen eine rändelförmige Aufrauhung vorzusehen.

Die Anbindung der Spreizschalen am Schaftteil erfolgt zweckmäßigerweise mit zwei Stegen, um ein Verkanten der Spreizschalen beim Eintreiben in das Bohrloch zu verhindern.

Aus Materialersparnisgründen einerseits und zur Aufnahme von im Bohrloch verbliebenem Bohrmehl andererseits können über die Mantelfläche verteilt am Schaftteil mehrere längsverlaufende Aussparungen, sowie an der Stirnfläche des Spreizkonus ein Hohlraum angeordnet sein.

Eine einfache und kostengünstige Herstellung des Spreizankers aus Metall ist mit dem an sich bekannten Spritzgußverfahren möglich. Danach wird der Spreizanker aus Metallpulver im Spritzgußverfahren unter Verwendung eines Bindersystems und nachträglichem Entbindern und Sintern hergestellt. Zur Ausformung des Spalts zwischen den Spreizschalen und den Polygonflächen des Spreizkonus wird ein an den Eckkanten des Polygons geteilter Schieber verwendet, dessen einzelne Teile entlang den Polygonflächen ausgezogen werden.

Die Erfindung wird nachfolgend anhand der Zeichnung näher erläutert.

Es zeigen:
- **Figur 1**: den im Pulverspritzgußverfahren hergestellten Metall-Spreizanker,
- **Figur 2**: einen Querschnitt des Spreizkonus gemäß der Schnittlinie A-A,
- **Figur 3**: den im Bohrloch eines Bauteiles verankerten Spreizanker.

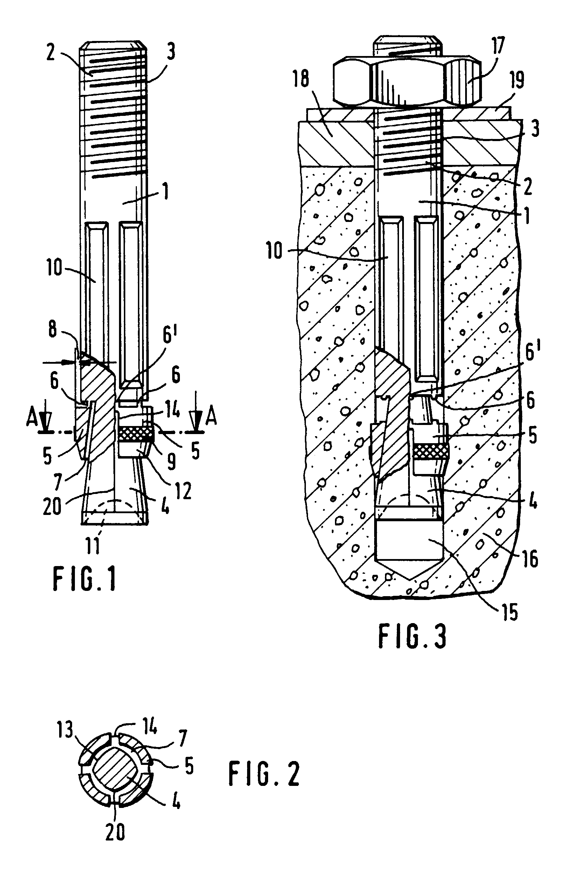

Der in Figur 1 dargestellte Spreizanker 1 aus Metall besteht aus dem Schaftteil 2, an dessen hinteren Ende eine Außengewinde 3 und am vorderen Ende ein Spreizkonus 4 angeordnet ist. In Figur 2 ist erkennbar, daß der Spreizkonus 4 im Querschnitt ein Polygon - im dargestellten Ausführungsbeispiel ein Viereck - bildet. Jeder Fläche 13 des Polygons ist eine Spreizschale 5 zugeordnet, die über Stege 6 mit dem Schaftteil 2 verbunden ist. Jede Spreizschale 5 ist vorzugsweise mit zwei Stegen am Schaftteil 2 angehängt, wobei ein Steg 6' vorzugsweise zwischen zwei Spreizschalen 5 angeordnet ist, so daß über diesen Steg 6' jeweils zwei benachbarte Spreizschalen gehalten werden. Die Innenfläche der Spreizschalen 5 bilden mit der Polygonfläche 13 einen Spalt 7, dessen Dicke etwa dem radialen Überstand 8 der Spreizschale 5 gegenüber dem Schaftdurchmesser entspricht.

Zur Erhöhung der Reibung der Spreizschalen 5 mit der Bohrlochwandung weisen diese an ihrer Außenfläche eine rändelartige Aufrauhung 9 auf. Zur Materialeinsparung einerseits und zur Aufnahme von Bohrmehl andererseits ist die Außenfläche des Schaftteiles 2 mit längsverlaufenden Aussparungen 10 und die Stirnfläche des Spreizkonus 4 mit einem Hohlraum 11 versehen. Zum leichteren Einführen des Spreizankers in das Bohrloch im Bauteil weisen die Spreizschalen 5 an ihrer vorderen Stirnseite eine Anlaufschräge 12 auf.

Der in Figur 2 dargestellte Querschnitt gemäß der Schnittlinie A-A zeigt den als Viereck ausgebildeten Spreizkonus 4, wobei die Polygonflächen 13 eine Krümmung aufweisen. Um eine Entformung zu ermöglichen, ist der Krümmungsradius auf der gesamten Länge des Spreizkonus 4 an jeder Stelle gleich. Die Spreizschalen 5 sind an ihren Längskanten durch einen Schlitz 14 voneinander getrennt.

Die Herstellung des Spreizankers 1 erfolgt im Pulver-Spritzguß unter Verwendung eines Spritzgußwerkzeuges. Die Ausbildung der Innenflächen der Spreizschalen 5 und der Polygonflächen 13 des Spreizkonus 4 erfolgt durch einen Schieber, der an den Eckkanten 20 des Polygons in einzelne Schieberelemente geteilt ist. Die Dicke der einzelnen Schieberelemente entspricht dem Spalt 7 zwischen den Spreizschalen 5 und den Polygonflächen 13.

In der Abbildung gemäß Figur 3 ist der Spreizanker 1 in dem Bohrloch 15 des Bauteils 16 verankert. Beim Einsetzen des Spreizankers 1 in das Bohrloch 15 werden die radial überstehenden Spreizschalen 5 auf den Durchmesser des Bohrloches 15 zusammengedrückt, so daß die Spreizschalen 5 auf den Polygonflächen 13 des Spreizkonus 4 aufsitzen. Beim Zusammendrücken werden die Verbindungsstege 6,6' abgeschert, so daß die Spreizschalen 5 axial verschiebbar auf den Polygonflächen 13 aufliegen. Durch Aufschrauben der Mutter 17 auf das Außengewinde 3 des Schaftteiles 2 wird das Schaftteil 2 in Richtung Bohrlochmündung verschoben, so daß der Spreizkonus 4 in die durch die Bohrlochwandung festgehaltenen Spreizschalen 5 eingezogen wird. Durch die zum Bohrlochgrund ansteigenden Polygonflächen 13 werden die Spreizschalen 5 radial nach außen gedrückt und der Spreizanker 1 im Bohrloch 15 verankert. Gleichzeitig erfolgt die Verspannung des zu befestigenden Gegenstandes 18 über eine Unterlagscheibe 19 am Bauteil 16.

## Patentansprüche

1. Spreizanker (1) aus Metall mit einem Schaftteil (2), das an seinem hinteren Ende Mittel (3) zum Halten oder Festspannen eines Gegenstandes und am vorderen Ende einen Spreizkonus (4) aufweist, der von einem reduzierten Querschnitt ausgehend sich zum vorderen Ende hin auf etwa den Schaftdurchmesser erweitert und auf den durch Schlitze (14) voneinander getrennte Spreizschalen (5) angeordnet sind, die einen radialen Überstand gegenüber dem Schaftdurchmesser aufweisen und die mit einem Spalt (7), dessen Dicke etwa dem radialen Überstand (8) der Spreizschalen (5) gegenüber dem Schaftdurchmesser entspricht, zum Schaftteil angeordnet sind, **dadurch gekennzeichnet,** daß der Querschnitt des Spreizkonus (4) ein Polygon bildet, daß an jeder Polygonfläche (13) eine der Spreizschalen (5) mit dem Spalt (7) zur Polygonfläche (13) angeordnet ist, und daß jede Spreizschale (5) an ihrer zum hinteren Ende weisenden Stirnseite mit dem Schaftteil (2) über Sollbruchstellen bildende Stege (6,6') verbunden ist.

2. Spreizanker nach Anspruch 1, **dadurch gekennzeichnet,** daß die Polygonflächen (13) eine Krümmung mit an jeder Stelle gleichem Krümmungsradius aufweisen.

3. Spreizanker nach Anspruch 1, **dadurch gekennzeichnet,** daß der Spreizkonus (4) vier Polygonflächen (13) aufweist.

4. Spreizanker nach Anspruch 1, **dadurch gekennzeichnet,** daß die Spreizschalen (5) an ihrer vorderen Stirnseite eine Anlaufschräge (12) aufweisen.

5. Spreizanker nach Anspruch 1, **dadurch gekennzeichnet,** daß die Spreizschalen (5) an ihrer Außenfläche mit einer rändelförmigen Aufrauhung (9) versehen sind.

6. Spreizanker nach Anspruch 1, **dadurch gekennzeichnet,** daß jede Spreizschale (5) mit wenigstens zwei Stegen (6,6') am Schaftteil (2) angebunden ist.

7. Spreizanker nach Anspruch 1, **dadurch gekennzeichnet,** daß das Schaftteil (2) an seinem hinteren Ende ein Außengewinde (3) und zwischen dem Spreizkonus (4) und dem Außengewinde (3) über die Mantelfläche verteilt mehrere längsverlaufende Aussparungen (10) aufweist.

8. Spreizanker nach Anspruch 1, **dadurch gekennzeichnet,** daß in der Stirnfläche des Spreizkonus (4) ein Hohlraum (11) ausgebildet ist.

9. Verfahren zur Herstellung des Spreizankers aus Metall nach einem der vorhergehenden Ansprüche, **dadurch gekennzeichnet,** daß das Schaftteil (2) mit dem Spreizkonus (4) und den Spreizschalen (5) aus Metallpulver im Spritzgußverfahren unter Verwendung eines Bindersystems und nachträglichem Entbindern und Sintern hergestellt wird, wobei zur Ausformung des Spalts (7) zwischen den Spreizschalen (5) und den Polygonflächen (13) des Spreizkonus (4) ein an den Eckkanten (20) des Polygons geteilter Schieber verwendet wird.

## Claims

1. An expansible anchor (1) of metal having a shank part (2) which at its rear end has means (3) for holding or fixing an article and its front end has an expander cone (4) which widens from a reduced cross-section towards the front end to approximately the diameter of the shank and on which expansible segments (5) separated from one another by slots (14) are arranged, which expansible segments project radially with respect to the diameter of the shank and are arranged spaced from the shank part by a gap (7), the width of which corresponds approximately to the distance (8) by which the expansible segments (5) project radially with respect to the diameter of the shank, characterized in that the cross-section of the expander cone (4) forms a polygon, that on each face (13) of the polygon there is arranged one of the expansible segments (5) spaced by the gap (7) from the face (13) of the polygon, and that each expansible segment (5) is joined at its end face directed towards the rear end to the shank part (2) by way of web members (6, 6') constituting predetermined break points.

2. An expansible anchor according to claim 1, characterized in that the faces (13) of the polygon have a curvature with the same radius of curvature at every point.

3. An expansible anchor according to claim 1, characterized in that the polygon of the expander cone (4) has four faces (13).

4. An expansible anchor according to claim 1, characterized in that the expansible segments (5) have a ramp-like slope (12) at their front end.

5. An expansible anchor according to claim 1, characterized in that the expansible segments (5) are provided on their outer face with a knurl-like roughening (9).

6. An expansible anchor according to claim 1, characterized in that each expansible segment (5) is joined by at least two web members (6, 6') to the shank part (2).

7. An expansible anchor according to claim 1, characterized in that at its rear end the shank part (2) has an external thread (3) and between the expander cone (4) and the external thread (3) it has several longitudinally extending recesses (10) distributed over its outer surface.

8. An expansible anchor according to claim 1, characterized in that a cavity (11) is formed in the end face of the expander cone (4).

9. A method for the manufacture of the expansible anchor from metal according to one of the preceding claims, characterized in that the shank part (2) with the expander cone (4) and the expansible segments (5) is manufactured from powdered metal by an injection-moulding process using a system of binders and with subsequent removal of the binders and sintering, and a slide member divided at the corner edges (20) of the polygon is used to take out the gap (7) between the expansible segments (5) and the faces (13) of the polygon of the expander cone (4).

## Revendications

1. Dispositif d'ancrage à cheville expansible métallique (1), comportant une partie formant fût (2), qui présente à son extrémité arrière des moyens (3) pour maintenir ou serrer solidement un objet, et à son extrémité avant un cône d'expansion (4) qui, en partant d'une section transversale réduite s'élargit en direction de l'extrémité avant jusqu'à atteindre approximativement le diamètre du fût, et sur lequel sont disposées des coques d'expansion (5) séparées les unes des autres par des interstices (4), qui présentent une saillie radiale par rapport au diamètre du fût et qui sont disposées en ménageant un interstice (7) dont l'épaisseur correspond approximativement à la saillie radiale (8) des coques d'expansion (5) par rapport au diamètre du fût, caractérisé en ce que la section transversale du cône d'expansion (4) a une forme polygonale, en ce que sur chaque surface polygonale (13) est disposée une des coques d'expansion (5), avec l'interstice (7) par rapport à la surface polygonale (13) et en ce que chaque coque d'expansion (5) est reliée à la partie formant fût (2) sur son côté frontal orienté vers l'extrémité arrière, par l'intermédiaire d'entretoises (6, 6') formant des zones de rupture obligée.

2. Dispositif d'ancrage à cheville expansible selon la revendication 1, caractérisé en ce que les surfaces polygonales (13) présentent une courbure dont le rayon de courbure est le même partout.

3. Dispositif d'ancrage à cheville expansible selon la revendication 1, caractérisé en ce que le cône d'expansion (4) présente quatre surfaces polygonales (13).

4. Dispositif d'ancrage à cheville expansible selon la revendication 1, caractérisé en ce que les coques d'expansion (5) présentent sur leur côté frontal avant, une rampe (12) de raccordement pour faciliter l'introduction du dispositif d'ancrage.

5. Dispositif d'ancrage à cheville expansible selon la revendication 1, caractérisé en ce que les coques d'expansion (5) sont munies sur leur surface extérieure d'aspérités (9) du genre d'un moletage.

6. Dispositif d'ancrage à cheville expansible selon la revendication 1, caractérisé en ce que chaque coque d'expansion (5) est reliée à la partie formant fût (2) par au moins deux entretoises (6, 6').

7. Dispositif d'ancrage à cheville expansible selon la revendication 1, caractérisé en ce que la partie formant fût (2) présente à son extrémité arrière un filetage extérieur (3) et,entre le cône d'expansion (4) et le filetage extérieur (3),plusieurs évidements (10) s'étendant dans le sens longitudinal, répartis sur la surface extérieure.

8. Dispositif d'ancrage à cheville expansible selon la revendication 1, caractérisé en ce qu'un espace creux (11) est formé dans la surface frontale du cône d'expansion (4).

9. Procédé de fabrication du dispositif d'ancrage à cheville expansible métallique, selon l'une des revendications précédentes, caractérisé en ce que la partie formant fût (2), comportant le cône d'expansion (4) et les coques d'expansion (5), est fabriquée à partir de poudre métallique selon le procédé de moulage par injection, en utilisant un système de liaison ou de liant, cette opération étant suivie d'une élimination du liant et d'un frittage, une broche/ divisée aux arêtes (20) du polygone, étant utilisée pour la formation de l'interstice (7) entre les coques d'expansion (5) et les surfaces polygonales (13) du cône d'expansion.
